# EUROPÄISCHE PATENTANMELDUNG

(11) **EP 2 666 585 A1**
(43) Veröffentlichungstag der Anmeldung: **27.11.2013**
(21) Anmeldenummer: 13168547.1
(22) Anmeldetag: 21.05.2013
(51) Int. Cl.: B23Q 3/155, B23Q 3/157

(54) **Werkzeugträgersystem**

(30) Priorität: 24.05.2012 DE 102012104490
(71) Anmelder: Index-Werke GmbH & Co. KG Hahn & Tessky, 73730 Esslingen (DE)
(72) Erfinder: Baumann, Ulrich, 73252 Lenningen (DE); Schleich, Günther, 73269 Hochdorf (DE); Handel, Christoph, 72555 Metzingen (DE); Haderer, Frank-Otto, 73773 Aichwald (DE)
(74) Vertreter: Hoeger, Stellrecht & Partner Patentanwälte

(57) **Zusammenfassung**

Um ein Werkzeugträgersystem für eine Werkzeugmaschine umfassend eine Werkzeugträgerbasis, wobei insbesondere die Werkzeugträgerbasis und eine Werkstückaufnahme der Werkzeugmaschine zur Bearbeitung von Werkstücken relativ zueinander bewegbar sind, eine an der Werkzeugträgerbasis angeordnete Werkzeugträgereinheit, welche ein Werkzeugträgerelement mit einem ersten Werkzeugschnittstellenelement einer Werkzeugschnittstelle aufweist, in welches ein zweites Werkzeugschnittstellenelement einer Werkzeugaufnahmeeinheit einsetzbar ist, derart zu verbessern, dass eine Vielzahl von Werkzeugaufnahmeeinheiten möglichst effizient eingesetzt werden kann, wird vorgeschlagen, dass an der Werkzeugträgerbasis ein in einer Erstreckungsrichtung verlaufender Magazinkörper eines Werkzeugmagazins angeordnet ist, an welchem Werkzeugaufnahmeeinheiten gehalten und wechselweise durch Bewegen des Magazinkörpers in eine dem ersten Werkzeugschnittstellenelement des Werkzeugträgerelements zugeordnete Einwechselposition bringbar sind, dass in der Einwechselposition das erste Werkzeugschnittstellenelement und das zweite Werkzeugschnittstellenelement miteinander verbindbar sind und dass die derart mit dem Werkzeugträgerelement verbundene Werkzeugaufnahmeeinheit durch eine zweite Relativbewegung zwischen dem Magazinkörper und dem Werkzeugträgerelement zwischen einer Magazinstellung und einer Bearbeitungsstellung hin- und herbewegbar ist, und dass die Werkzeugaufnahmeeinheit in der Bearbeitungsstellung durch das Werkzeugträgerelement gehalten und positioniert ist.

## Beschreibung

Die Erfindung betrifft ein Werkzeugträgersystem für eine Werkzeugmaschine, umfassend eine Werkzeugträgerbasis, wobei insbesondere die Werkzeugträgerbasis und eine Werkstückaufnahme der Werkzeugmaschine zur Bearbeitung von Werkstücken relativ zueinander bewegbar sind, eine an der Werkzeugträgerbasis angeordnete Werkzeugträgereinheit, welche ein Werkzeugträgerelement mit einem ersten Werkzeugschnittstellenelement einer Werkzeugschnittstelle aufweist, in welches ein zweites Werkzeugschnittstellenelement einer Werkzeugaufnahmeeinheit für ein angetriebenes Werkzeug einsetzbar ist.

Derartige Werkzeugträgersysteme sind aus dem Stand der Technik bekannt.

Diese Werkzeugträgersysteme umfassen üblicherweise Frässpindeln als Werkzeugträgerelemente, in welche Werkzeugaufnahmeeinheiten auswechselbar einsetzbar sind.

Bei derartigen Frässpindeln steht jedoch nur immer eine Werkzeugaufnahmeeinheit zur Verfügung, wobei ein Wechsel einer Werkzeugaufnahmeeinheit mittels eines Werkzeugwechslers erfolgen kann.

Der Erfindung liegt daher die Aufgabe zugrunde, ein Werkzeugträgersystem derart zu verbessern, dass eine Vielzahl von Werkzeugaufnahmeeinheiten möglichst effizient eingesetzt werden kann.

Diese Aufgabe wird bei einem Werkzeugträgersystem der eingangs beschriebenen Art erfindungsgemäß dadurch gelöst, dass an der Werkzeugträgerbasis ein in einer Erstreckungsrichtung verlaufender Magazinkörper eines Werkzeugmagazins angeordnet ist, an welchem Werkzeugaufnahmeeinheiten gehalten und wechselweise durch Bewegen des Magazinkörpers in eine dem ersten Werkzeugschnittstellenelement des Werkzeugträgerelements zugeordnete Einwechselposition bringbar sind, dass in der Einwechselposition das erste Werkzeugschnittstellenelement und das zweite Werkzeugschnittstellenelement miteinander verbindbar sind und dass die derart mit dem Werkzeugträgerelement verbundene Werkzeugaufnahmeeinheit durch eine zweite Relativbewegung zwischen dem Magazinkörper und dem Werkzeugträgerelement zwischen einer Magazinstellung und einer Bearbeitungsstellung hin- und herbewegbar ist, und dass die Werkzeugaufnahmeeinheit in der Bearbeitungsstellung durch das Werkzeugträgerelement gehalten und positioniert ist.

Der Vorteil der erfindungsgemäßen Lösung ist darin zu sehen, dass durch das Anordnen des Magazinkörpers an der Werkzeugträgerbasis und die Bewegbarkeit des Magazinkörpers relativ zu dem Werkzeugträgerelement die Möglichkeit geschaffen ist, einerseits eine Vielzahl von Werkzeugaufnahmeeinheiten am Magazinkörper vorzusehen und andererseits diese Werkzeugaufnahmeeinheiten schnell in das Werkzeugträgerelement einzuwechseln, so dass ein schneller Wechsel zwischen den Werkzeugen unterschiedlicher Werkzeugaufnahmeeinheiten möglich ist.

Kinematisch besonders vorteilhaft ist die Lösung dann gestaltet, wenn die Werkzeugaufnahmeeinheiten in der Erstreckungsrichtung aufeinanderfolgend gehalten und wechselweise durch Bewegen des Magazinkörpers in der Erstreckungsrichtung in eine dem ersten Werkzeugschnittstellenelement des Werkzeugträgerelements zugeordnete Einwechselposition bringbar sind, dass in der Einwechselposition durch eine erste quer zur Erstreckungsrichtung verlaufende Relativbewegung zwischen dem Magazinkörper und dem Werkzeugträgerelement das erste Werkzeugschnittstellenelement und das zweite Werkzeugschnittstellenelement aufeinander zu bewegbar und zur Fixierung der Werkzeugaufnahmeeinheit an dem Werkzeugträgerelement miteinander verbindbar sind und dass die derart mit dem Werkzeugträgerelement verbundene Werkzeugaufnahmeeinheit durch eine zweite Relativbewegung zwischen dem Magazinkörper und dem Werkzeugträgerelement zwischen einer Magazinstellung und einer Bearbeitungsstellung hin- und herbewegbar ist, und dass die Werkzeugaufnahmeeinheit in der Bearbeitungsstellung durch das Werkzeugträgerelement gehalten und positioniert ist.

Um in der Bearbeitungsstellung eine überbestimmte Positionierung der Werkzeugaufnahmeeinheit zu vermeiden, ist vorzugsweise vorgesehen, dass die jeweilige Werkzeugaufnahmeeinheit in der Bearbeitungsstellung ausschließlich durch das Werkzeugträgerelement positioniert und ausgerichtet gehalten ist und somit insbesondere unabhängig von dem Magazinkörper gehalten ist.

Dies kann beispielsweise dadurch erfolgen, dass die jeweilige Werkzeugaufnahmeeinheit in der Bearbeitungsstellung berührungsfrei zu dem Magazinkörper oder zu in diesen eingesetzten Aufnahmen für die Werkzeugaufnahmeeinheiten angeordnet ist.

Hinsichtlich der Ausbildung des Magazinkörpers sind die unterschiedlichsten Lösungen denkbar.

Beispielsweise wäre es denkbar, dass die Erstreckungsrichtung des Magazinkörpers, in welcher die Werkzeugaufnahmeeinheiten aufeinanderfolgend angeordnet sind, einer geraden Linie erfolgt.

Für die raumsparende Speicherung einer möglichst großen Zahl von Werkzeugaufnahmeeinheiten mit entsprechenden Werkzeugen ist es jedoch von Vorteil, wenn die Erstreckungsrichtung einer gekrümmten Linie folgt.

Eine besonders günstige Lösung sieht dabei vor, dass die Erstreckungsrichtung einer Kreisbahn um die Werkzeugträgereinheit folgt, so dass die Werkzeugaufnahmeeinheiten auf einer Kreisbahn um die Werkzeugträgereinheit angeordnet werden können.

Vorzugsweise verläuft dabei die Erstreckungsrichtung, längs welcher die Werkzeugaufnahmeeinheiten angeordnet sind, das heißt, die gerade Linie, die gekrümmte Linie oder die Kreisbahn, in einer Werkzeugebene.

Hinsichtlich der Verbindung der Werkzeugschnittstellenelemente sind die unterschiedlichsten Lösungen denkbar.

Beispielsweise könnten die Werkzeugschnittstellenelemente so ausgebildet sein, dass sie durch eine besondere Verschlussmechanik miteinander verbindbar sind.

Eine vorteilhafte Lösung sieht jedoch vor, dass durch die erste Relativbewegung das erste Werkzeugschnittstellenelement und das zweite Werkzeugschnittstellenelement in einer Einwechselrichtung bewegbar und danach miteinander verbindbar sind.

Die Einwechselrichtung könnte grundsätzlich in beliebigen Winkeln zur Werkzeugebene verlaufen.

Eine vorteilhafte Lösung sieht vor, dass die Einwechselrichtung in einem Winkel zwischen 0° und weniger als 20° zur Werkzeugebene geneigt verläuft.

Hinsichtlich des Verlaufs der zweiten Relativbewegung wurden bislang keine weiteren Angaben gemacht.

Das heißt, die zweite Relativbewegung kann beispielsweise quer oder schräg zur Werkezugebene oder in der Werkzeugebene verlaufen.

Vorzugsweise verläuft auch die zweite Relativbewegung quer zur Erstreckungsrichtung.

Ferner könnten die erste und die zweite Relativbewegung immer noch in unterschiedlichen Richtungen relativ zueinander verlaufen.

Eine besonders einfach realisierbare Lösung sieht vor, dass die zweite Relativbewegung zumindest in derselben Fläche wie die erste Relativbewegung, insbesondere parallel zur ersten Relativbewegung und vorzugsweise, in Fortsetzung der ersten Relativbewegung verläuft.

Hinsichtlich der Anordnung der einzelnen Werkzeugaufnahmeeinheiten am Magazinkörper wurden bislang keine näheren Angaben gemacht.

Vorteilhafterweise ist hierzu vorgesehen, dass der Magazinkörper für die Werkzeugaufnahmeeinheiten Halteaufnahmen aufweist, in denen die Werkzeugaufnahmeeinheiten in der Magazinstellung fixierbar sind und dass die Werkzeugaufnahmeeinheiten durch die zweite Relativbewegung von der Magazinstellung in eine Bearbeitungsstellung bringbar sind, in welcher die Werkzeugaufnahmeeinheiten unabhängig von den Halteaufnahmen durch das Werkzeugträgerelement gehalten sind.

Hinsichtlich des unabhängigen Haltens der Werkzeugaufnahmeeinheiten in den Halteaufnahmen in der Bearbeitungsstellung wäre es denkbar, dass die Werkzeugaufnahmeeinheiten auch in der Bearbeitungsstellung noch in Kontakt mit den Halteaufnahmen stehen und durch diese zumindest mitgeführt oder abgestützt werden.

Eine besonders günstige Lösung sieht jedoch vor, die Werkzeugaufnahmeeinheiten in der Bearbeitungsstellung berührungslos zu den Halteaufnahmen angeordnet sind.

Das heißt, dass in der Bearbeitungsstellung die Werkzeugaufnahmeeinheiten keinerlei Abstützung mehr durch die Halteaufnahmen erfahren, so dass in der Bearbeitungsstellung die Werkzeugaufnahmeeinheiten ausschließlich durch das Werkzeugträgerelement positioniert und abgestützt sind.

Hinsichtlich der Möglichkeit, die Werkzeugaufnahmeeinheiten von der Magazinstellung in die Bearbeitungsstellung zu bringen, wurden bislang keine näheren Angaben gemacht.

Eine kinematisch besonders einfache und vorteilhafte Lösung sieht dabei vor, dass die Werkzeugaufnahmeeinheiten von einer Magazinstellung in eine Bearbeitungsstellung und umgekehrt durch eine Bewegung parallel zur Einwechselrichtung bewegbar sind.

Um ferner die Werkzeugaufnahmeeinheiten in einer Magazinstellung am Magazinkörper zu fixieren, ist vorzugsweise vorgesehen, dass die Werkzeugaufnahmen des Magazinkörpers in der Magazinstellung in den Halteaufnahmen durch Fixiereinheiten fixierbar sind.

Die Fixiereinheiten können beispielsweise als selbsttätig wirkende Fixiereinheiten, wie beispielsweise Rasteinheiten, ausgebildet sein, es können aber auch betätigbare Fixiereinheiten, beispielsweise Klemmeinheiten vorgesehen sein.

Alternativ dazu wäre es aber auch denkbar, anstelle der Rasteinheiten Klemmeinheiten vorzusehen, die durch eine speziell ansteuerbare Klemmeinrichtung entweder die Werkzeugaufnahmeeinheiten in der Magazinstellung festhalten oder freigeben.

Hinsichtlich der detaillierten Ausbildung der Halteaufnahmen wurden im Zusammenhang mit der bisherigen Erläuterung der einzelnen Lösungen keine näheren Angaben gemacht.

So sieht eine besonders einfache Lösung vor, dass die Halteaufnahmen als Durchbrüche ausgebildet sind, welche die Werkzeugaufnahmeeinheiten durchgreifen.

Derartige Halteaufnahmen können dabei unmittelbar im Magazinkörper vorgesehen sein.

Eine andere Möglichkeit sieht vor, dass die Halteaufnahmen in den Magazinkörper eingesetzte Elemente sind.

Um die Werkzeugaufnahmeeinheiten in den Halteaufnahmen fixieren zu können, ist vorzugsweise vorgesehen, dass die Werkzeugaufnahmeeinheiten umfangsseitig angeordnete erste Halteflächen aufweisen, an welchen die Aufnahmeeinheiten in Halteaufnahmen des Magazinkörpers fixierbar sind.

Ferner ist es weiterhin vorteilhaft, wenn die Werkzeugaufnahmeeinheiten in der Magazinstellung mit den ersten Halteflächen an den zweiten Halteflächen der Halteaufnahmen anliegen und durch Bewegen in die Bearbeitungsstellung bringbar sind, in welcher die ersten Halteflächen berührungsfrei zu den zweiten Halteflächen angeordnet sind.

Das heißt, dass die Halteflächen so gestaltet sind, dass durch einfache Verschiebung der Werkzeugaufnahmeeinheiten zwischen der Magazinstellung und der Bearbeitungsstellung einerseits in der Magazinstellung die Halteflächen einander berühren und somit die Werkzeugaufnahmeeinheiten halten und andererseits durch bloße Relativbewegung, insbesondere in Einwechselrichtung, die Möglichkeit besteht, die ersten und die zweiten Halteflächen berührungsfrei zueinander anzuordnen, um in der Bearbeitungsstellung eine Berührung und somit Führung der Werkzeugaufnahmeeinheiten durch die Halteaufnahmen zu vermeiden.

Um in einfacher Weise die unterschiedlichsten Werkzeugaufnahmeeinheiten in das Werkzeugträgerelement einwechseln zu können, ist vorzugsweise vorgesehen, dass das Werkzeugmagazin einen Antrieb zum Bewegen des Magazinkörpers in Richtung der Erstreckungsrichtung aufweist.

Mit einem derartigen Antrieb besteht die Möglichkeit, schnell den Magazinkörper in Richtung der Erstreckungsrichtung zu bewegen und somit unterschiedliche Werkzeugaufnahmeeinheiten in die Einwechselposition zu bringen.

Vorzugsweise ist dabei vorgesehen, dass die Halteaufnahmen beim Bewegen des Magazinkörpers in der Werkzeugebene bewegbar sind und somit beim Bewegen des Magazinkörpers in Richtung der Erstreckungsrichtung stets in der Werkzeugebene verbleiben.

Hinsichtlich der Ausbildung des Werkzeugträgerelements wurden im Zusammenhang mit der bisherigen Erläuterung keinerlei nähere Angaben gemacht.

Prinzipiell könnte das Werkzeugträgerelement ein stationäres Werkzeugträgerelement sein.

Eine besonders vorteilhafte Lösung sieht jedoch vor, dass das Werkzeugträgerelement eine Werkzeugspindel ist, die in einem Werkzeugspindelgehäuse drehbar gelagert ist.

Mit einer derartigen Werkzeugspindel besteht die Möglichkeit, die Werkzeugaufnahmeeinheiten und somit die in diesen Werkzeugaufnahmeeinheiten sitzenden Werkzeuge drehend oder rotierend anzutreiben.

Insbesondere besteht bei einer derartigen Werkzeugspindel die Möglichkeit, die Werkzeugspindel mit hoher Antriebsleistung auszustatten, die dann alle Werkzeugaufnahmeeinheiten mit allen Werkzeugen wechselweise aufnehmen kann, so dass dadurch eine hohe Antriebsleistung zur Bearbeitung mit drehend oder rotierend angetriebenen Werkzeugen realisierbar ist.

Vorzugsweise ist dabei vorgesehen, dass die Werkzeugspindel um eine Werkzeugspindelachse drehbar ist, wobei diese insbesondere parallel zur Einwechselrichtung verläuft.

In diesem Fall lassen sich die Bewegung der Werkzeugspindel und die Einwechselrichtung optimal einsetzen.

Die relative Bewegung zwischen dem Werkzeugträgerelement und dem Werkzeugmagazin kann in unterschiedlichster Art und Weise realisiert werden. Beispielsweise ist bei einer Lösung vorgesehen, dass das Werkzeugmagazin relativ zur Werkzeugträgerbasis in Richtung einer Verschieberichtung bewegbar ist.

Alternativ dazu ist vorgesehen, dass das Werkzeugträgerelement relativ zur Werkzeugträgerbasis in Richtung einer Verschieberichtung bewegbar ist.

Eine derartige Bewegbarkeit des Werkzeugträgerelements könnte entweder dadurch realisiert werden, dass die gesamte Werkzeugträgereinheit relativ zur Werkzeugträgerbasis in Richtung der Verschieberichtung bewegbar ist.

Eine andere vorteilhafte Lösung sieht jedoch vor, dass die Werkzeugträgereinheit fest an der Werkzeugträgerbasis gehalten ist und das Werkzeugträgerelement der Werkzeugträgereinheit relativ zur Werkzeugträgerbasis in Richtung der Verschieberichtung bewegbar ist.

Eine derartige Bewegung des Werkzeugträgerelements relativ zur Werkzeugträgereinheit lässt sich dadurch realisieren, dass das Werkzeugträgerelement der Werkzeugträgereinheit in einem inneren Gehäuse angeordnet ist, welches relativ zu einem äußeren Gehäuse in Richtung der Verschieberichtung bewegbar ist.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: eine schematische Darstellung einer Werkzeugmaschine mit einem erfindungsgemäßen Werkzeugträgersystem;
- Fig. 2: eine vergrößerte Darstellung des Werkzeugträgersystems gemäß Fig. 1 mit in Magazinstellung stehender Werkzeugaufnahmeeinheit und in Werkzeugwechselstellung stehendem Werkzeugträgerelement;
- Fig. 3: eine Darstellung ähnlich Fig. 2 bei in Magazinstellung stehender Werkzeugaufnahmeeinheit und mit dem Werkzeugträgerelement verbundener Werkzeugaufnahmeeinheit;
- Fig. 4: eine Darstellung einer an dem Werkzeugträgerelement fixierten Werkzeugaufnahmeeinheit in einer Bearbeitungsstellung;
- Fig. 5: einen Schnitt längs Linie 5-5 in Fig. 4;
- Fig. 6: eine vergrößerte Darstellung einer Anordnung der Werkzeugaufnahmeeinheit in Bearbeitungsstellung relativ zu einer Halteaufnahme in einem Magazinkörper;
- Fig. 7: einen Schnitt ähnlich Fig. 5 bei in Magazinstellung stehender Werkzeugaufnahmeeinheit und in Werkzeugwechselstellung stehendem Werkzeugträgerelement bei einem zweiten Ausführungsbeispiel eines erfindungsgemäßen Werkzeugträgersystems;
- Fig. 8: eine vergrößerte Darstellung des Schnitts ähnlich Fig. 7 bei in Magazinstellung stehender Werkzeugaufnahmeeinheit und an dem Werkzeugträgerelement fixierter Werkzeugaufnahmeeinheit und
- Fig. 9: einen Schnitt ähnlich Fig. 8 bei in Bearbeitungsstellung stehender Werkzeugaufnahmeeinheit, die an dem Werkzeugträgerelement fixiert ist.

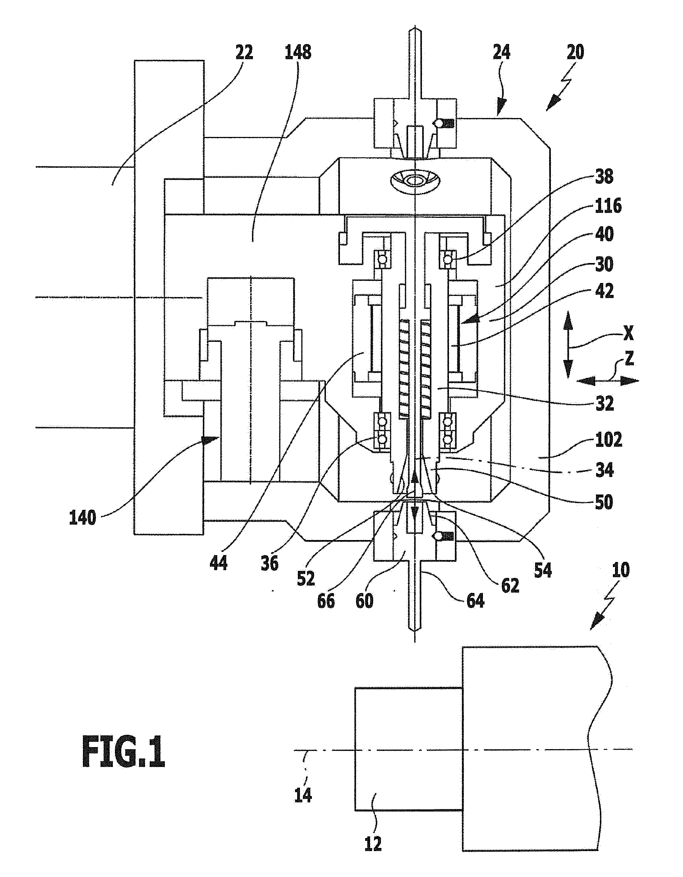

Ein Ausführungsbeispiel einer ausschnittsweise dargestellten Werkzeugmaschine in Fig. 1 umfasst eine Werkstückaufnahme, beispielsweise eine Werkstückspindel 10, in welche ein Werkstück 12 eingespannt ist.

Mit der Werkstückspindel 10 ist das Werkstück 12 um eine Spindelachse 14 rotierend antreibbar und insbesondere um die Spindelachse 14 in beliebigen Drehstellungen festlegbar.

Ferner umfasst die erfindungsgemäße Werkzeugmaschine ein als Ganzes mit 20 bezeichnetes Werkzeugträgersystem mit einer Werkzeugträgerbasis 22, an welcher eine als Ganzes mit 24 bezeichnete Werkzeugträgereinheit angeordnet ist.

Mit der Werkzeugträgerbasis 22 ist die Werkzeugträgereinheit 24 beispielsweise mindestens in einer X-Richtung relativ zur Werkstückspindelachse 14, und zwar vorzugsweise quer, insbesondere senkrecht zu dieser bewegbar und beispielsweise ist die Werkzeugträgereinheit 24 mittels der Werkzeugträgerbasis 22 auch noch in einer zur Werkstückspindelachse 14 parallelen Z-Richtung und gegebenenfalls auch noch in einer quer zur X-Richtung und Z-Richtung verlaufenden Y-Richtung bewegbar.

Es ist aber auch möglich, die Bewegbarkeit in X-Richtung und/oder in Z-Richtung und/oder in Y-Richtung durch eine entsprechend relativ zur Werkzeugträgerbasis 22bewegbar angeordnete Werkstückspindel 10 zu realisieren.

Zur Aufnahme von verschiedenen Werkzeugen ist die Werkzeugträgereinheit 24 mit einem Werkzeugspindelgehäuse 30 versehen, in welchem eine Werkzeugspindel 32 um eine Werkzeugspindelachse 34 drehbar gelagert ist, und zwar durch ein die Werkzeugspindel 32 im Werkzeugspindelgehäuse 30 lagerndes vorderes Spindellager 36 und ein hinteres Spindellager 38.

Ferner ist die Werkzeugspindel 32 durch einen als Ganzes mit 40 bezeichneten Spindelmotor antreibbar, welcher einen auf der Werkstückspindel 32 unmittelbar sitzenden Rotor 42 sowie einen im Werkzeugspindelgehäuse 30 angeordneten Stator 44 umfasst, so dass der Rotor 42 ebenfalls über die Spindellager 36 und 38 drehbar gelagert ist und unmittelbar die Werkzeugspindel 32 drehend antreibt.

Zur Aufnahme eines Werkzeugs ist ein vorderes, über das Werkzeugspindelgehäuse 30 überstehendes Spindelende 50 der Werkzeugspindel 32 mit einem ersten Werkzeugschnittstellenelement 52 versehen, welches beispielsweise als sich zu einer Stirnseite 54 der Werkzeugspindel 32 erweiternder Aufnahmekegel ausgebildet ist.

In dieses erste Werkzeugschnittstellenelement 52 ist eine als Ganzes mit 60 bezeichnete Werkzeugaufnahmeeinheit einsetzbar, welche einerseits ein zweites Werkzeugschnittstellenelement 62 aufweist und andererseits ein Werkzeug 64 trägt, mit welchem das Werkstück 12 bearbeitbar ist.

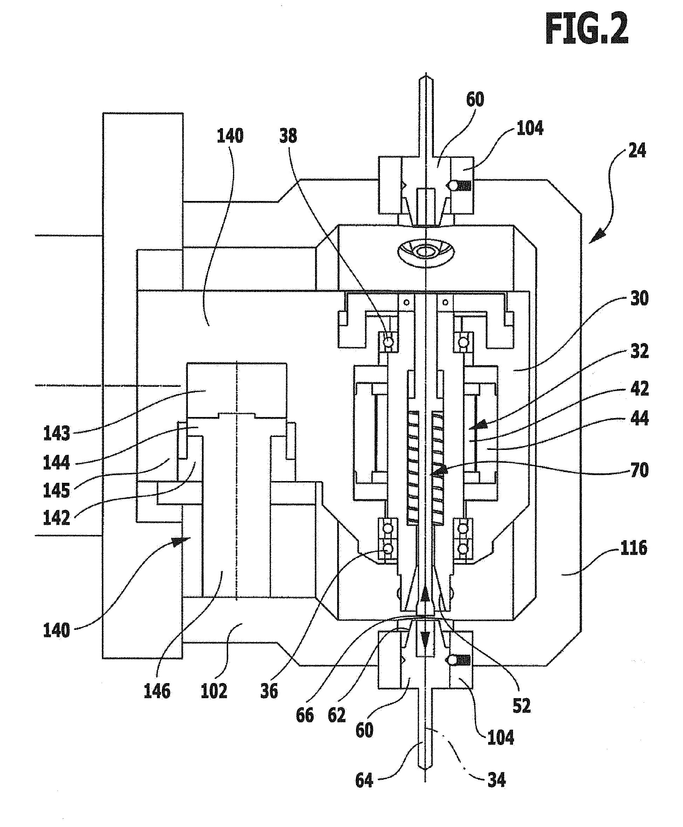

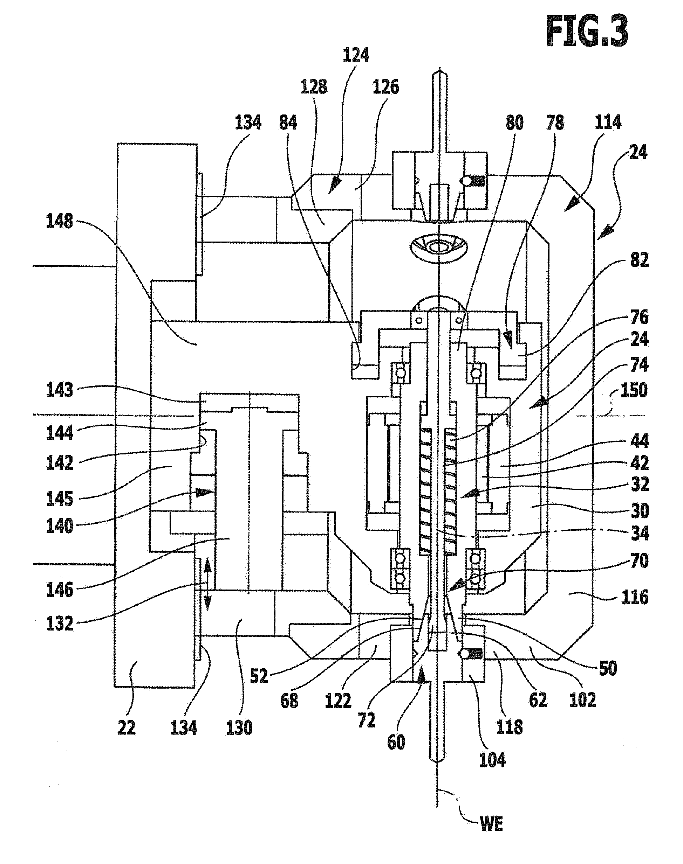

Das zweite Werkzeugschnittstellenelement 62 und das erste Werkzeugschnittstellenelement 52 sind bei einer in Fig. 1 und Fig. 2 dargestellten Einwechselposition der Werkzeugaufnahmeeinheit 60 durch eine erste Relativbewegung in einer Einwechselrichtung 66, die beispielsweise parallel zur Werkzeugspindelachse 34 verläuft, miteinander in Eingriff bringbar, wie in Fig. 3 dargestellt, so dass das zweite Werkzeugschnittstellenelement 62 und das erste Werkzeugschnittstellenelement 52 fest ineinandersitzen und eine Werkzeugschnittstelle 68 bilden (Fig. 3).

Zur Fixierung der Verbindung zwischen dem zweiten Werkzeugschnittstellenelement 62 und dem ersten Werkzeugschnittstellenelement 52 ist eine als Ganzes mit 70 bezeichnete Werkzeugspanneinrichtung vorgesehen, welche einen Spannkopf 72 aufweist, der beispielsweise in das zweite Werkzeugschnittstellenelement 62 eingreift und dieses in Richtung des ersten Werkzeugschnittstellenelements 52 zieht. Hierzu ist der Spannkopf 72 mit einer Spannstange 74 verbunden, welche koaxial zur Werkzeugspindel 32 und in dieser verläuft und durch ein in der Werkstückspindel 32 angeordnetes Spannelement 76, beispielsweise eine Spannfeder, beaufschlagbar ist.

Um der Spannkraft durch das Spannelement 76 zum Wechseln der Werkzeugaufnahmeeinheit 60 und somit zum Lösen der Werkzeugschnittstelle 68 entgegenwirken zu können, ist die Spannstange 74 an ihrem dem Spannkopf 72 gegenüberliegenden Ende mit einer Löseeinheit, beispielsweise mit einem Lösezylinder 78, verbunden, der an einem dem vorderen Spindelende 50 gegenüberliegenden rückwärtigen Spindelende 80 angeordnet ist und einen mit der Spannstange 74 verbundenen Spannkolben 82 umfasst, der in einem drehfest im Werkzeugspindelgehäuse 30 angeordneten Bewegungsraum 84 liegt und in dem Bewegungsraum 84 parallel zur Werkzeugspindelachse 34 bewegbar ist.

Vorzugsweise ist die Spannstange 74 so angeordnet, dass sie relativ zum Spannkolben 82 des Lösezylinders 78 frei drehbar ist und sich somit mit der Werkzeugspindel 32 frei mitdrehen kann.

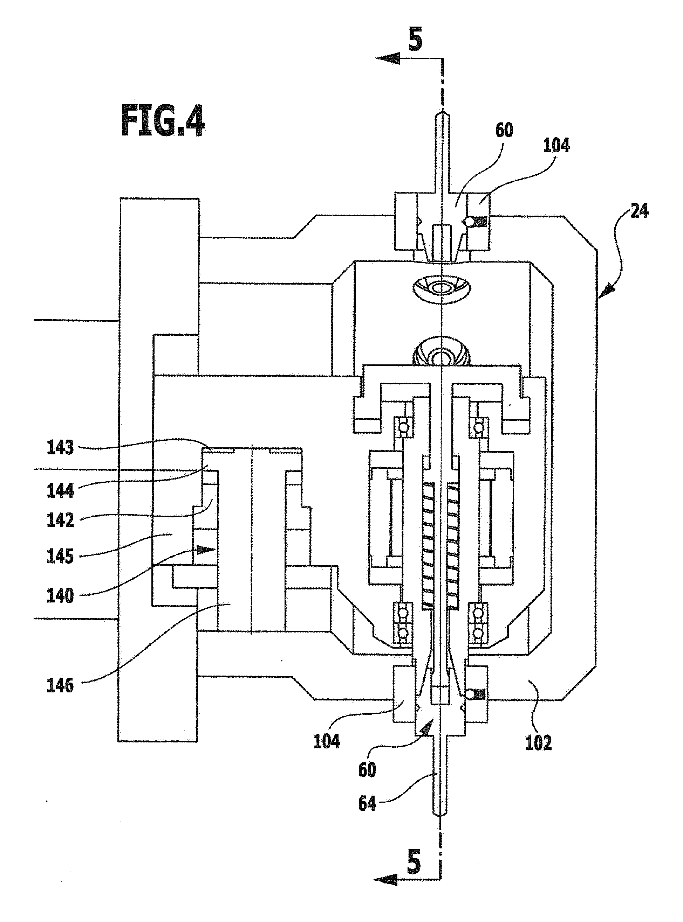

Wie in Fig. 4 dargestellt, ist der Werkzeugspindel 32 ein als Ganzes mit 100 bezeichnetes Werkzeugmagazin zugeordnet, welches einen Magazinkörper 102 aufweist, in welchem mehrere, insbesondere eine Vielzahl von Halteaufnahmen 104ᵢ für eine entsprechende Zahl von Werkzeugaufnahmeeinheiten 60ᵢ angeordnet sind. Die Halteaufnahmen 104 liegen insbesondere in einer der Zeichenebene in Fig. 4 entsprechenden oder in Fig. 2 und 3 als Werkzeugebene WE bezeichneten Ebene auf einer geschlossenen Kreisbahn 106, wobei beispielsweise die Halteaufnahmen 104 mit ihren Mittelachsen 108 in der Werkzeugebene WE liegen.

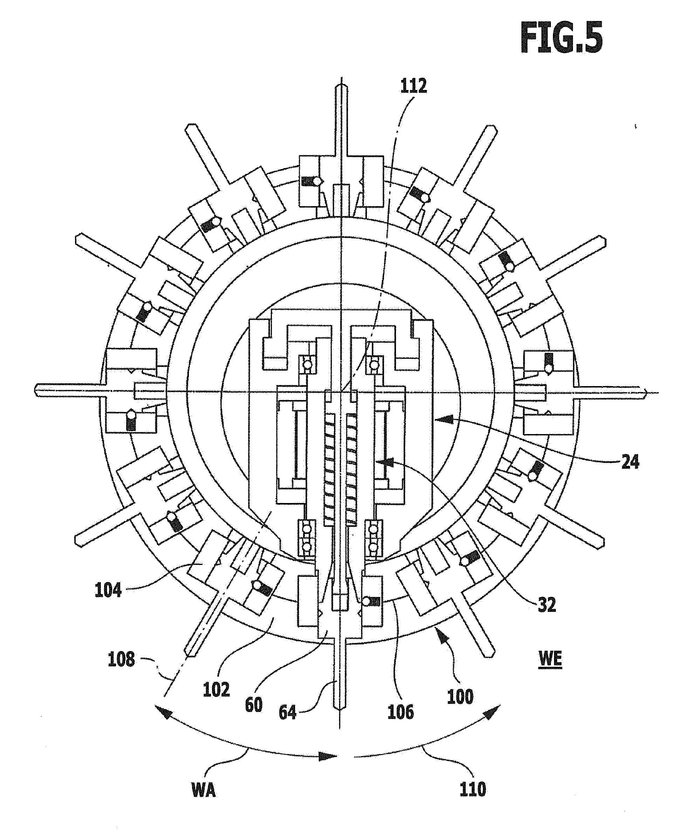

Die Halteaufnahmen 104 sind - wie in Fig. 5 dargestellt- dabei am Magazinkörper 102 auf der Kreisbahn 106 in einer quer, insbesondere senkrecht zur ersten Relativbewegung oder Einwechselrichtung 66 verlaufenden Erstreckungsrichtung 110, insbesondere einer Umlaufrichtung, aufeinanderfolgend und insbesondere in konstanten Winkelabständen WA angeordnet. Die Kreisbahn 106 und die Umlaufrichtung 110 beziehen sich auf eine Mittelachse 112 des Magazinkörpers 102, wobei in diesem Fall der Magazinkörper 102 um die Werkzeugträgereinheit 24 herum verlaufend ausgebildet ist und diese umschließt.

Ferner ist, wie in Fig. 1 bis 4 dargestellt, der Magazinkörper 102 vorzugsweise als Haube 114 ausgebildet, welche die Werkzeugträgereinheit 24 mit einer oberen Deckelseite 116, die ungefähr parallel zur Werkzeugebene WE verläuft, übergreift, wobei die Deckelseite 116 in einen Magazinring 118 der Haube 114 übergeht, in welchem die Halteaufnahmen 104 für die Werkzeugaufnahmeeinheiten 60 angeordnet sind.

Der Magazinring 118 erstreckt sich dabei in Richtung der Werkzeugträgerbasis 22 bis zu einem Fußring 122 der Haube 114, welcher durch einen Drehantrieb 124 antreibbar ist, wobei der Drehantrieb 124 einen mit dem Fußring 122 verbundenen Rotor 126 trägt, während ein Stator 128 fest mit einer Magazinbasis 130 verbunden ist, die ihrerseits relativ zur Werkzeugträgerbasis 22 in einer zur ersten Relativbewegung oder Einwechselrichtung 66 parallelen Verschieberichtung 132 bewegbar geführt ist, wobei dies durch Führungen 134 erfolgt, die eine Bewegung der Magazinbasis 130 relativ zur Werkzeugträgerbasis 22 in der Verschieberichtung 132 zulassen.

Zur Positionierung der Magazinbasis 130 relativ zur Werkzeugträgerbasis 22 in der Verschieberichtung 132 ist ein als Ganzes mit 140 bezeichneter Verschiebeantrieb vorgesehen, welcher zwei Zylinderkammern 142 und 143 umfasst, durch welche ein Verschiebekolben 144 bewegbar ist, wobei der Verschiebekolben 144 in einem den Verschiebekolben 144 und die Zylinderkammern 142 und 143 aufnehmenden Zylindergehäuse 145 angeordnet ist und über eine Kolbenstange 146 mit der Magazinbasis 130 verbunden ist, um so die Magazinbasis 130 in der Verschieberichtung 132 verschieben zu können.

Vorzugsweise ist die Zylinderkammer 142 des Verschiebeantriebs 140 in einem Basisteil 148 der Werkzeugträgereinheit 24 angeordnet, mit welcher diese fest an der Werkzeugträgerbasis 22 gehalten ist.

Der Verschiebeantrieb 140 könnte bei einer Abwandlung des ersten Ausführungsbeispiels aber auch dazu dienen, bei fest auf der Werkzeugträgerbasis 22 angeordneter Magazinbasis 130, das Basisteil 148 der Werkzeugträgereinheit 24 relativ zu der Werkzeugträgerbasis 22 zu verschieben um die erste Relativbewegung realisieren zu können.

Durch den Verschiebeantrieb 140 lässt sich somit die erste Relativbewegung realisieren, wobei die Magazinbasis 130 und damit auch der Magazinkörper 102 in eine Werkzeugwechselstellung, dargestellt in Fig. 1 und Fig. 2 bewegbar sind, in welcher die gesamte Haube 114 und somit auch der Magazinkörper 102 unabhängig von der Werkzeugspindel 32 frei um eine Magazinachse 150 frei gedreht werden können, da die Werkzeugschnittstellenelemente 62 und 52 voneinander getrennt sind und somit insbesondere das zweite Werkzeugschnittstellenelement 62 in einem derartigen Abstand von der Stirnseite 54 des vorderen Spindelendes 50 entfernt ist, so dass keine Kollisionen zwischen dem zweiten Werkzeugschnittstellenelement 62 und dem vorderen Spindelende 50 auftreten kann.

Damit besteht die Möglichkeit, eine der in Fig. 1 und 2 schematisch dargestellten Werkzeugaufnahmeeinheiten 60 in eine Einwechselposition gemäß Fig. 3 zu bringen, in welcher deren zweites Werkzeugschnittstellenelement 62 koaxial zum ersten Werkzeugschnittstellenelement 52 der Werkzeugspindel 32 ausgerichtet ist.

Die Verbindung zwischen dem zweiten Werkzeugschnittstellenelement 62 und dem ersten Werkzeugschnittstellenelement 52 ist dadurch herstellbar, dass bei einer Durchführung der ersten Relativbewegung der Werkzeugträger 102 in der Einwechselrichtung 66, die beispielsweise parallel zur Werkzeugspindelachse 34 verläuft, verschoben wird, wodurch das zweite Werkzeugschnittstellenelement 62 mit dem ersten Werkzeugschnittstellenelement 52 in Eingriff kommt, so dass eine Werkzeughaltestellung erreicht wird, wie in Fig. 3 dargestellt, und ein Spannen des zweiten Werkzeugschnittstellenelements 62 relativ zum ersten Werkzeugschnittstellenelement 52 mittels der Werkzeugspanneinrichtung 70 erfolgen kann.

In dieser Werkzeughaltestellung sitzt die Werkzeugaufnahmeeinheit 60 nach wie vor fest in der entsprechenden Halteaufnahme 104 des Werkzeugträgers 102.

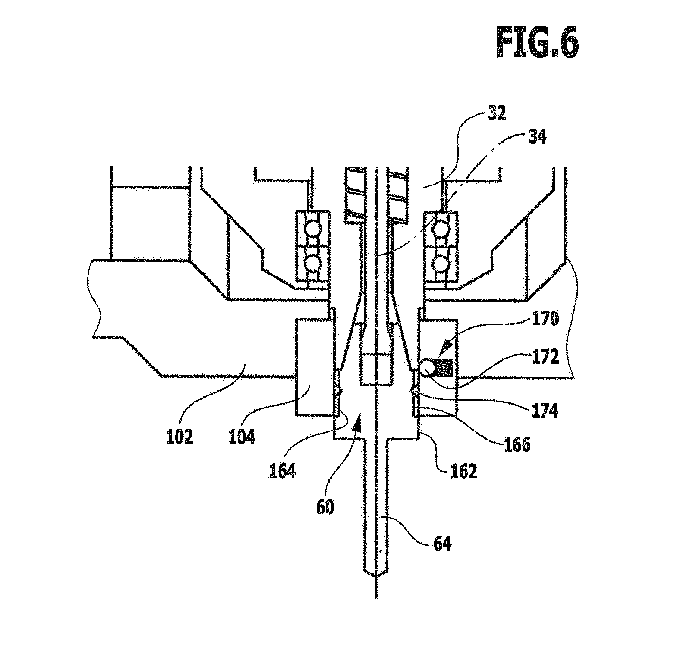

Wird nun in der Werkzeughaltestellung der Magazinkörper 102 in Richtung des vorderen Spindelendes 50 der Werkzeugspindel 32 mittels des Verschiebeantriebs 140 weiter verschoben, so wird durch diese zweite Relativbewegung, die parallel zur ersten Relativbewegung, insbesondere in Fortsetzung derselben, verläuft, die jeweilige Halteaufnahme 104 weiter in Richtung des Werkzeugspindelgehäuses 30 verschoben, während sich die Werkzeugaufnahmeeinheit 60 durch die feste Verbindung mit der Werkzeugspindel 32 mittels der Werkzeugschnittstellenelemente 52 und 62 nicht mitbewegen kann, so dass die Werkzeugaufnahmeeinheit 60 relativ zur Halteaufnahme 104 von der Magazinstellung (Fig. 3) ausgehend derart verschoben werden kann, dass die Werkzeugaufnahmeeinheit 60 mit dem jeweiligen Werkzeug in Richtung einer Außenseite des Magazinkörpers 102 verschoben ist und über die Halteaufnahme 104 übersteht (Fig. 4 bis 6).

Diese Stellung der Werkzeugaufnahmeeinheit 60 wird als Bearbeitungsstellung bezeichnet.

In dieser Bearbeitungsstellung ist die Werkzeugaufnahmeeinheit 60 berührungslos relativ zur Halteaufnahme 104 drehbar, wie im Zusammenhang mit Fig. 4 bis 6 dargestellt, da die Werkzeugaufnahmeeinheit 60 erste Halteflächen 162 aufweist, die in der in Fig. 4 bis 6 dargestellten Bearbeitungsstellung gegenüber zweiten Halteflächen 164 der Halteaufnahmen 104 so weit verschoben sind, dass die ersten Halteflächen 162 und die zweiten Halteflächen 164 einander nicht berühren, während in der Bearbeitungsstellung zwischen den zweiten Halteflächen 164 und den diesen gegenüberliegenden Außenflächen 166 der Werkzeugaufnahmeeinheit 60 ein Zwischenraum besteht, der es ermöglicht, dass sich die gesamte Werkzeugaufnahmeeinheit 60 berührungslos zur jeweiligen Halteaufnahme 104 um die Werkzeugspindelachse 34 drehen kann.

Damit erfolgt in der Bearbeitungsstellung auch die Positionierung des Werkzeugs 64 und somit auch der Werkzeugaufnahmeeinheit 60 ausschließlich über die Werkzeugspindel 32 und völlig unabhängig von den Halteaufnahmen 104 sowie dem Magazinkörper 102.

Eine Positionierung der Werkzeugaufnahmeeinheit 60 durch die Mitwirkung der jeweiligen Halteaufnahme 104 erfolgt erst dann, wenn die Werkzeugaufnahmeeinheit 60 von der Bearbeitungsposition wieder zurückgezogen ist in die Magazinposition, welche in Fig. 2 und 3 dargestellt ist.

In der Magazinposition liegen die ersten Halteflächen 162 der Werkzeugaufnahmeeinheit 60 wiederum an den zweiten Halteflächen 164 der Halteaufnahme 104 an, so dass dadurch eine Abstützung der Werkzeugaufnahmeeinheit 60 relativ zur Halteaufnahme 104 und somit auch relativ zum Magazinkörper 102 erfolgen.

Darüber hinaus ist noch zur Fixierung der Werkzeugaufnahmeeinheit 60 in der Halteaufnahme 104 eine Rasteinheit 170 vorgesehen, welche ein Rastelement 172 aufweist, das in eine Rastausnehmung 174 in der Magazinstellung eingreift.

Wird somit in der Magazinstellung der Werkzeugaufnahmeeinheit 60 die Werkzeugschnittstelle 68 gelöst, wie in Fig. 1 und 2 dargestellt, so wird die Werkzeugaufnahmeeinheit 60 in der Magazinstellung einerseits durch die an den zweiten Halteflächen 164 der Halteaufnahme 104 anliegenden ersten Halteflächen 162 der Werkzeugaufnahmeeinheit 60 gehalten und außerdem noch durch die Rasteinrichtung 170, der Rastelemente 172 in die Magazinstellung, wie in Fig. 1 bis 3 dargestellt, in die Rastausnehmung 174 eingreift.

Somit kann in der Magazinstellung der Magazinkörper 102 um die Magazinachse 150 wiederum gedreht werden, um die Werkzeugaufnahmeeinheit 60 eines anderen Werkzeugs 64 in Einwechselstellung zu bringen und in der Einwechselstellung das erste Werkzeugschnittstellenelement 52 und das zweite Werkzeugschnittstellenelement 62 durch Bewegen der Werkzeugspindel 32 in der Einwechselrichtung 66 in Eingriff zu bringen und wiederum die weitere Werkzeugaufnahmeeinheit 60 an der Werkzeugspindel 32 für eine weitere Bearbeitung zu fixieren.

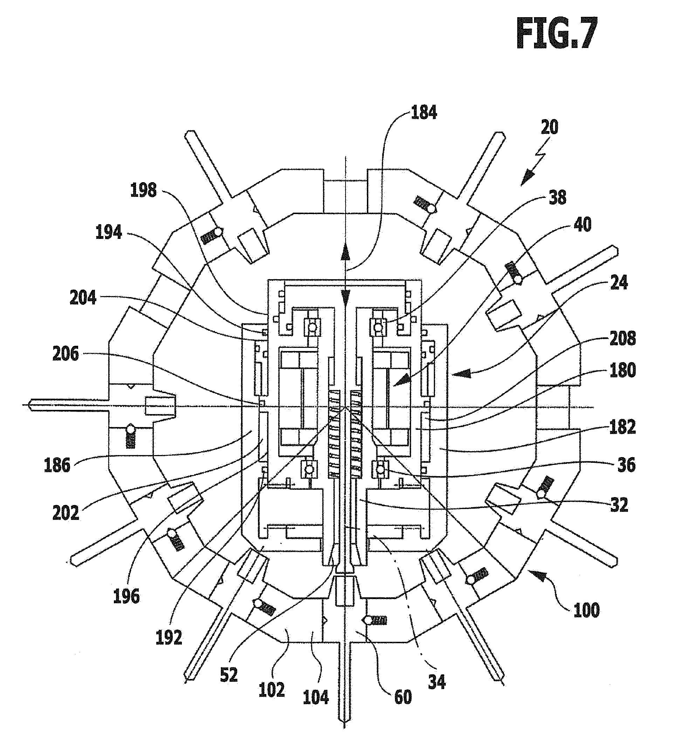

Bei einem zweiten Ausführungsbeispiel eines erfindungsgemäßen Werkzeugträgersystems 20', dargestellt in Fig. 7, sind weder die Werkzeugträgereinheit 24 noch das Werkzeugmagazin 100 relativ zur Werkzeugträgerbasis 22 in der Verschieberichtung 132 verschiebbar.

Vielmehr ist die Werkzeugspindel 32 mit den Spindellagern 36 und 38 sowie dem Spindelmotor in einem inneren Spindelgehäuse 180 gelagert, das relativ zu einem äußeren Spindelgehäuse 182 in einer parallel zur Werkzeugspindelachse 34 verlaufenden Verschieberichtung 184 verschiebbar ist, um die erste Relativbewegung und die zweite Relativbewegung realisieren zu können.

Hierzu bildet das äußere Spindelgehäuse 182 ein Zylindergehäuse 186, welches mit Führungsvorsprüngen 192 und 194 an Kolbenmantelflächen 196 und 198 dicht anschließend anliegt.

Zwischen diesen Führungsvorsprüngen 192 und 194 liegen Zylinderkammern 202 und 204, welche durch eine Ringkolbenanordnung 206, die an dem inneren Spindelgehäuse 180 radial außenliegend zwischen den Kolbenmantelflächen 196 und 198 liegt, getrennt sind, wobei die Ringkolbenanordnung 206 dichtend an einer Zylinderinnenfläche 208 anliegt.

Durch Hydraulikbeaufschlagung der Zylinderkammern 202 und 204 ist somit die Ringkolbenanordnung 206 und somit auch der fest mit dieser verbundene innere Spindelgehäuse 180 in der Verschieberichtung 184 relativ zu dem Magazinkörper 102 sowie relativ zu in Halteaufnahmen 104 des Magazinkörpers 102 sitzenden Werkzeugaufnahmeeinheiten 60 bewegbar, die in dem Magazinkörper 102 in gleicher Weise angeordnet sind, wie dies im Zusammenhang mit dem ersten Ausführungsbeispiel beschrieben wurde.

Anstelle der im ersten Ausführungsbeispiel beschriebenen Relativverschiebbarkeit zwischen der Werkzeugträgereinheit 24 und dem Werkzeugmagazin 100 in der Verschieberichtung 132 ist beim zweiten Ausführungsbeispiel durch die Verschiebbarkeit des inneren Spindelgehäuses 180 relativ zum äußeren Spindelgehäuse 182 ebenfalls die Verschiebbarkeit der Werkzeugspindel 32 relativ zu den Halteaufnahmen 104 möglich und es sind die gleichen Funktionen realisierbar wie dies im Zusammenhang mit dem ersten Ausführungsbeispiel beschrieben wurde.

In Fig. 7 ist die Werkzeugwechselstellung der Werkzeugspindel 32 dargestellt, in welcher der Magazinkörper 102 mit den Werkzeugaufnahmeeinheiten in der Erstreckungsrichtung 110 kollisionsfrei zur Werkzeugspindel 32 bewegbar ist.

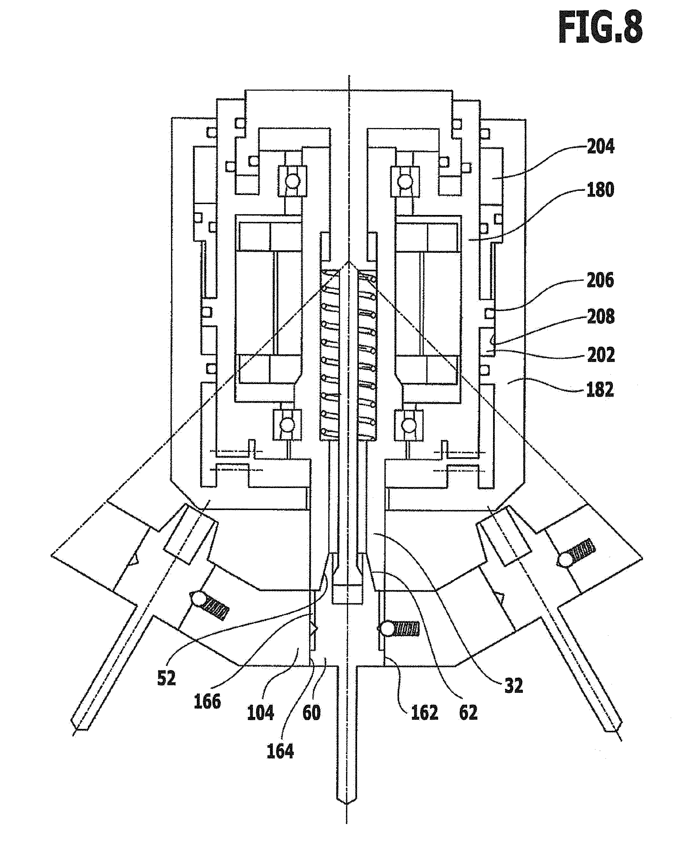

Wie beispielsweise in Fig. 8 dargestellt, ist ausgehend von der Werkzeugwechselstellung durch die erste Relativbewegung das erste Werkzeugschnittstellenelement 52 mit dem zweiten Werkzeugschnittstellenelement 62 zur Herstellung der Werkzeugschnittstelle 68 verbindbar, so dass die Werkzeugspindel 32' in der Werkzeughaltestellung steht, wobei die Werkzeugaufnahmeeinheit 60 noch in der jeweiligen Halteaufnahme 104 in der Magazinstellung steht.

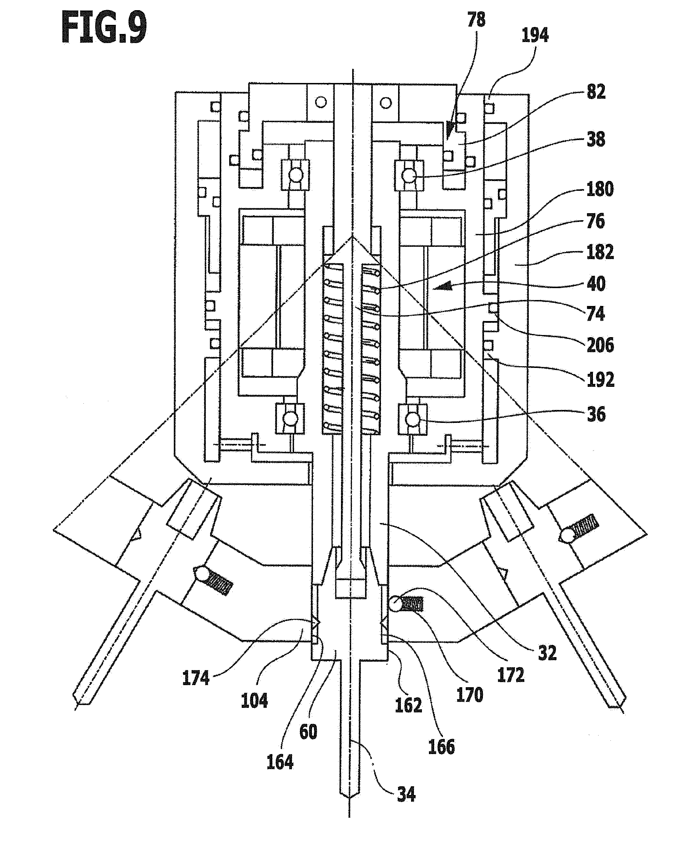

Durch Realisieren der zweiten Relativbewegung, im Fall des zweiten Ausführungsbeispiels durch Verschieben der Werkzeugspindel 32 in der Verschieberichtung 184, besteht nun zusätzlich die Möglichkeit, die Werkzeugaufnahmeeinheit 60 von der Magazinstellung in die Bearbeitungsstellung, dargestellt in Fig. 9 zu verschieben, in welcher die Werkzeugaufnahmeeinheit 60 relativ zur Halteaufnahme 104 frei drehbar und lediglich durch die Werkzeugspindel 32 positioniert ist.

Im Übrigen sind die identischen Teile mit den identischen Bezugszeichen versehen, so dass hinsichtlich der Beschreibung derselben vollinhaltlich auf die Ausführungen zum ersten Ausführungsbeispiel Bezug genommen werden kann.

## Patentansprüche

1. Werkzeugträgersystem (20) für eine Werkzeugmaschine umfassend eine Werkzeugträgerbasis (22), wobei insbesondere die Werkzeugträgerbasis (22) und eine Werkstückaufnahme (10) der Werkzeugmaschine zur Bearbeitung von Werkstücken relativ zueinander bewegbar sind,
eine an der Werkzeugträgerbasis (22) angeordnete Werkzeugträgereinheit (24), welche ein Werkzeugträgerelement (32) mit einem ersten Werkzeugschnittstellenelement (52) einer Werkzeugschnittstelle (68) aufweist, in welches ein zweites Werkzeugschnittstellenelement (62) einer Werkzeugaufnahmeeinheit (60) einsetzbar ist,
**dadurch gekennzeichnet, dass** an der Werkzeugträgerbasis (22) ein in einer Erstreckungsrichtung (110) verlaufender Magazinkörper (102) eines Werkzeugmagazins (100) angeordnet ist, an welchem Werkzeugaufnahmeeinheiten (60) gehalten und wechselweise durch Bewegen des Magazinkörpers (102) in eine dem ersten Werkzeugschnittstellenelement (52) des Werkzeugträgerelements (32) zugeordnete Einwechselposition bringbar sind, dass in der Einwechselposition das erste Werkzeugschnittstellenelement (52) und das zweite Werkzeugschnittstellenelement (62) miteinander verbindbar sind und dass die derart mit dem Werkzeugträgerelement (32) verbundene Werkzeugaufnahmeeinheit (60) durch eine zweite Relativbewegung zwischen dem Magazinkörper (102) und dem Werkzeugträgerelement (32) zwischen einer Magazinstellung und einer Bearbeitungsstellung hin- und herbewegbar ist, und dass die Werkzeugaufnahmeeinheit (60) in der Bearbeitungsstellung durch das Werkzeugträgerelement (32) gehalten und positioniert ist.

2. Werkzeugträgersystem (20) nach Anspruch 1, **dadurch gekennzeichnet, dass** die Werkzeugaufnahmeeinheiten (60) in der Erstreckungsrichtung (110) aufeinanderfolgend angeordnet sind und wechselweise durch Bewegen des Magazinkörpers (102) in eine dem ersten Werkzeugschnittstellenelement (52) des Werkzeugträgerelements (32) zugeordnete Einwechselposition bringbar sind, dass in der Einwechselposition das erste Werkzeugschnittstellenelement (52) und das zweite Werkzeugschnittstellenelement (62) miteinander verbindbar sind und dass die derart mit dem Werkzeugträgerelement (32) verbundene Werkzeugaufnahmeeinheit (60) durch eine zweite Relativbewegung zwischen dem Magazinkörper (102) und dem Werkzeugträgerelement (32) zwischen einer Magazinstellung und einer Bearbeitungsstellung hin- und herbewegbar ist, und dass die Werkzeugaufnahmeeinheit (60) in der Bearbeitungsstellung durch das Werkzeugträgerelement (32) gehalten und positioniert ist.

3. Werkzeugträgersystem nach Anspruch 1 oder 2, **dadurch gekennzeichnet, dass** die jeweilige Werkzeugaufnahmeeinheit (60) in der Bearbeitungsstellung ausschließlich durch das Werkzeugträgerelement (32) positioniert und ausgerichtet gehalten ist.

4. Werkzeugträgersystem nach einem der voranstehenden Ansprüche,
**dadurch gekennzeichnet, dass** die Erstreckungsrichtung (110), längs welcher die Werkzeugaufnahmeeinheiten (60) angeordnet sind, in einer Werkzeugebene (WE) verläuft.

5. Werkzeugträgersystem nach einem der voranstehenden Ansprüche,
**dadurch gekennzeichnet, dass** durch die erste Relativbewegung das erste Werkzeugschnittstellenelement (52) und das zweite Werkzeugschnittstellenelement (62) einer Einwechselrichtung (66) bewegbar und miteinander verbindbar sind.

6. Werkzeugträgersystem nach einem der voranstehenden Ansprüche,
**dadurch gekennzeichnet, dass** der Magazinkörper (102) für die Werkzeugaufnahmeeinheiten (60) Halteaufnahmen (104) aufweist, in denen die Werkzeugaufnahmeeinheiten (60) in einer Magazinstellung fixierbar sind und dass die Werkzeugaufnahmeeinheiten (60) durch die zweite Relativbewegung von der Magazinstellung in eine Bearbeitungsstellung bringbar sind, in welcher die Werkzeugaufnahmeeinheiten (60) unabhängig von den Halteaufnahmen (104) durch das Werkzeugträgerelement (32) gehalten sind.

7. Werkzeugträgersystem nach Anspruch 6, **dadurch gekennzeichnet, dass** die Werkzeugaufnahmeeinheiten (60) in der Bearbeitungsstellung berührungslos zu den Halteaufnahmen (104) angeordnet sind.

8. Werkzeugträgersystem nach einem der voranstehenden Ansprüche,
**dadurch gekennzeichnet, dass** die Werkzeugaufnahmeeinheiten (60) von einer Magazinstellung in eine Bearbeitungsstellung und umgekehrt durch eine Bewegung parallel zu der Einwechselrichtung (66) bewegbar sind.

9. Werkzeugträgersystem nach einem der Ansprüche 6 bis 8, **dadurch gekennzeichnet, dass** Halteaufnahmen (104) des Magazinkörpers (102) mit Fixiereinrichtungen (170) versehen sind, durch welche die Werkzeugaufnahmeeinheiten (60) in einer Magazinstellung in den Halteaufnahmen (104) fixierbar sind.

10. Werkzeugträgersystem nach einem der voranstehenden Ansprüche,
**dadurch gekennzeichnet, dass** die Werkzeugaufnahmeeinheiten (60) umfangsseitig angeordnete erste Halteflächen (162) aufweisen, an welchen die Werkzeugaufnahmeeinheiten (60) in Halteaufnahmen (104) des Magazinkörpers (102) fixierbar sind.

11. Werkzeugträgersystem nach einem der voranstehenden Ansprüche, **dadurch gekennzeichnet, dass** die Werkzeugaufnahmeeinheiten (60) in einer Magazinstellung mit den ersten Halteflächen (162) an zweiten Halteflächen (164) der Halteaufnahmen (104) anliegen und durch Bewegen in die Bearbeitungsstellung bringbar sind, in welcher die ersten Halteflächen (162) berührungsfrei zu den zweiten Halteflächen (164) angeordnet sind.

12. Werkzeugträgersystem nach einem der voranstehenden Ansprüche, **dadurch gekennzeichnet, dass** das Werkzeugmagazin (100) einen Antrieb (124) zum Bewegen des Magazinkörpers (102) in Richtung der Erstreckungsrichtung (110) aufweist.

13. Werkzeugträgersystem nach einem der voranstehenden Ansprüche, **dadurch gekennzeichnet, dass** das Werkzeugträgerelement eine Werkzeugspindel (32) ist, die in einem Werkzeugspindelgehäuse (30) drehbar gelagert ist.

14. Werkzeugträgersystem nach einem der voranstehenden Ansprüche, **dadurch gekennzeichnet, dass** das Werkzeugmagazin (100) relativ zur Werkzeugträgerbasis (22) in Richtung einer Verschieberichtung (132) bewegbar ist.

15. Werkzeugträgersystem nach einem der voranstehenden Ansprüche, **dadurch gekennzeichnet, dass** das Werkzeugträgerelement (32) relativ zur Werkzeugträgerbasis (22) in Richtung einer Verschieberichtung (132) bewegbar ist.
